# EUROPÄISCHE PATENTSCHRIFT

(11) **EP 4 215 764 B1**
(45) Veröffentlichungstag und Bekanntmachung des Hinweises auf die Patenterteilung: **15.05.2024**
(21) Anmeldenummer: 22210986.0
(22) Anmeldetag: 02.12.2022
(51) Int. Cl.: F16B 19/02

(54) **FIXIERUNGSSYSTEM**
FIXATION SYSTEM
SYSTÈME DE FIXATION

(30) Priorität: 20.01.2022 DE 102022101304
(43) Veröffentlichungstag der Anmeldung: 26.07.2023
(73) Patentinhaber: Audi AG, 85057 Ingolstadt (DE)
(72) Erfinder: BENDER, Benjamin, 71717 Beilstein (DE); KREIS, Martin, 74074 Heilbronn (DE)

(56) Entgegenhaltungen:
- EP-B1- 3 268 268
- EP-B1- 3 609 775
- CN-A- 111 306 163
- DE-A1-102017 201 792
- DE-B4- 10 002 481
- KR-U- 19980 057 879

## Beschreibung

Die Erfindung betrifft ein Fixierungssystem und ein Verfahren zum Fixieren eines Fahrzeugs.

Die Druckschrift DE 10 2019 211 860 A1 beschreibt eine Werkzeuganordnung für einen Herstellungsprozess von Fixierpunkten. Die Druckschrift DE 100 02 481 B4 beschreibt ein Transportgehänge für eine zu transportierende Fahrzeugkarosserie.

Vor diesem Hintergrund war es eine Aufgabe, ein Fahrzeug zum Bearbeiten geeignet zu fixieren.

Diese Aufgabe wird durch ein Fixierungssystem und ein Verfahren mit den Merkmalen der unabhängigen Patentansprüche 1 und 6 gelöst. Ausführungsformen des Systems und des Verfahrens gehen aus den abhängigen Patentansprüchen und der Beschreibung hervor.

Das erfindungsgemäße Fixierungssystem ist zum Fixieren eines Fahrzeugs, in der Regel einer Karosserie des Fahrzeugs, in mindestens zwei unterschiedlichen Bearbeitungsanlagen zum Durchführen von unterschiedlichen Bearbeitungsmethoden, bspw. zum Herstellen, zum Montieren, zum Testen, zum Warten, zum Bearbeiten und/oder zum Reparieren, für das Fahrzeug ausgebildet, wobei das Fixierungssystem mindestens ein Fixierungsmodul aufweist, wobei jeweils nur ein Fixierungsmodul in einem Bauteil der Karosserie angeordnet, anordenbar und/oder anzuordnen ist, wobei das jeweilige Fixierungsmodul in dem einen Bauteil dazu ausgebildet ist, die Karosserie zum Durchführen einer ersten Bearbeitungsmethode in einer ersten Bearbeitungsanlage und zum Durchführen mindestens einer zweiten Bearbeitungsmethode in mindestens einer zweiten Bearbeitungsanlage lösbar zu fixieren.

Üblicherweise ist das mindestens eine Fixierungsmodul rotationssymmetrisch, bspw. trichterförmig und/oder konisch, ausgebildet. Das Fixierungsmodul kann bspw. als Hülse ausgebildet sein bzw. bezeichnet werden. Außerdem ist an einer Innenwand des mindestens einen Fixierungsmoduls ein Gewinde angeordnet. Weiterhin ist das mindestens eine Fixierungsmodul in das eine Bauteil, also jeweils ein Fixierungsmodul in jeweils ein Bauteil, in Ausgestaltung eingeschweißt.

Das Fixierungssystem weist mindestens ein Umlaufteil auf, das in das mindestens eine Fixierungsmodul des Bauteils vorübergehend und wieder lösbar einsetzbar und/oder einzusetzen ist, wobei das mindestens eine Umlaufteil als Adapter zum Fixieren der Karosserie in mindestens einer der Bearbeitungsanlagen ausgebildet ist.

In weiterer Ausgestaltung weist das Fixierungssystem mindestens ein Anlagenmodul als Komponente jeweils einer Bearbeitungsanlage auf, das in und/oder an mindestens einer der Bearbeitungsanlagen angeordnet und in dem mindestens einen Fixierungsmodul als Gegenstück und/oder passförmig anzuordnen und/oder anordenbar ist bzw. angeordnet wird, wenn die Karosserie zum Bearbeiten des Fahrzeugs in der Bearbeitungsanlage anzuordnen ist bzw. angeordnet wird.

In Ausgestaltung weist die Karosserie mehrere Bauteile, bspw. n Bauteile mit n Fixierungsmodulen, auf, wobei n eine ganze Zahl ist, und wobei jeweils nur ein einziges Fixierungsmodul in einem Bauteil der insgesamt n Bauteile angeordnet ist und/oder wird.

Das erfindungsgemäße Verfahren ist zum Fixieren eines Fahrzeugs, üblicherweise zumindest einer Karosserie des Fahrzeugs und/oder eines zu bearbeitenden Fahrzeugs, in mindestens zwei unterschiedlichen Bearbeitungsanlagen vorgesehen, mit denen unterschiedliche Bearbeitungsmethoden, bspw. Herstellen, Montieren, Testen, Erproben, Kontrollieren, Warten, Bearbeiten und/oder Reparieren, für das Fahrzeug durchgeführt werden, wobei jeweils nur ein Fixierungsmodul in einem Bauteil der Karosserie angeordnet ist bzw. wird, wobei die Karosserie zum Durchführen einer ersten Bearbeitungsmethode mit dem jeweiligen Fixierungsmodul in dem einen Bauteil in einer ersten Bearbeitungsanlage und zum Durchführen mindestens einer zweiten Bearbeitungsmethode mit dem jeweiligen Fixierungsmodul, also mit demselben Fixierungsmodul, in dem einen Bauteil in mindestens einer zweiten Bearbeitungsanlage lösbar fixiert wird.

Es ist möglich, eine Ausführungsform des erfindungsgemäßen Verfahrens mit einer Ausführungsform des erfindungsgemäßen Fixierungssystems durchzuführen, das für jeweils ein Bauteil unter mindestens einem Bauteil, bspw. unter mehreren Bauteilen, der Karosserie jeweils nur ein Fixierungsmodul aufweist, mit dem das noch zu bearbeitende Fahrzeug modular in sämtlichen Bearbeitungsanlagen zu fixieren ist und/oder fixiert wird. Das Verfahren und das Fixierungssystem sind unabhängig von einem aktuellen Zustand des sich bspw. noch im Aufbau befindlichen und/oder bereits komplett aufgebauten und jeweils noch zu bearbeitenden Fahrzeugs vorgesehen. Dabei kann bereits die aus den Bauteilen bestehende Karosserie definitionsgemäß als Fahrzeug, üblicherweise als noch im Aufbau befindliches und noch zu bearbeitendes Fahrzeug, ausgebildet sein und/oder bezeichnet werden. Während der Herstellung und/oder während dem Aufbau wird die Karosserie um weitere Komponenten des noch herzustellenden und zu bearbeitenden Fahrzeugs ergänzt. Alternativ oder ergänzend kann auch das komplette Fahrzeug, das die Karosserie und die zusätzlichen Komponenten aufweist, unter Nutzung des Verfahrens und des Fixierungssystems bearbeitet werden.

Bei dem Verfahren ist es möglich, dass das Fahrzeug und somit seine Karosserie zum Bestimmen eines Luftwiderstands des Fahrzeugs in einem Windkanal als Bearbeitungsanlage bzw. Bereitstellungsanlage, zum Lackieren des Fahrzeugs in einer Lackieranlage als Bearbeitungsanlage und/oder zum Montieren des Fahrzeugs in einer Montageanlage als Bearbeitungsanlage mit dem Fixierungssystem vorübergehend fixiert wird.

Eine derartige Bearbeitungsanlage kann auch als Bereitstellungsanlage für das Fahrzeug ausgebildet sein bzw. bezeichnet werden, in der das Fahrzeug, üblicherweise zumindest dessen Karosserie, mit dem Fixierungssystem fixiert wird. Dabei ist es möglich, das noch herzustellende und im Aufbau befindliche Fahrzeug während seiner Herstellung bzw. Produktion in einem Werk in mehreren Bearbeitungs- und/oder Bereitstellungsanlagen vorübergehend anzuordnen, darin zu fixieren und jeweilige Bearbeitungsschritte durchzuführen. Dabei ist es auch möglich, das Fahrzeug in mindestens einer Bearbeitungs- und/oder Bereitstellungsanlage zu testen, zu kontrollieren und/oder zu prüfen. Auch nach abgeschlossener Herstellung und nachfolgender Nutzung des Fahrzeugs ist es ebenfalls möglich, das Fahrzeug in mindestens einer Bearbeitungs- und/oder Bereitstellungsanlage anzuordnen und darin bspw. zu überarbeiten, zu reparieren und/oder zu testen. Es ist möglich, sowohl das noch herzustellende aber auch das bereits hergestellte Fahrzeug mit dem Fixierungssystem in den Bearbeitungsanlagen anzuordnen.

Das Bauteil umschließt bspw. einen Hohlraum, wobei eine Wandstärke des Bauteils an mindestens einer Stelle vergrößert ist, in der das eine Fixierungsmodul angeordnet bzw. anzuordnen ist. Es ist auch möglich, dass das Bauteil als Profil, bspw. Strangprofil oder Strangpressprofil, ausgebildet ist. Das jeweils eine Fixierungsmodul in dem jeweiligen Bauteil ist zum modularen Fixieren des Fahrzeugs in unterschiedlichen Bearbeitungsanlagen ausgebildet, mit denen für das Fahrzeug unterschiedliche Funktionen zur Bereitstellung und/oder Bearbeitung durchgeführt werden. Das Fixierungsmodul ist zur Aufnahme eines Anlagenmoduls jeweils einer Bearbeitungsanlage ausgebildet.

Jedes Bauteil weist nur ein Fixierungsmodul auf, mit dem das Fahrzeug bei der Produktion und/oder zu Versuchszwecken, bspw. bei einem Aufbau des Fahrzeugs, in den Bearbeitungsanlagen temporär befestigt wird. Das Fixierungssystem weist mit dem jeweils einen Fixierungsmodul in jeweils einem Bauteil der Karosserie eine erste Befestigungshilfe auf, die direkt in dem Bauteil angeordnet ist. Das Umlaufteil als Adapter kann als zusätzliche zweite Befestigungshilfe in dem Fixierungsmodul angeordnet und daran und/oder darin angebracht werden. Dabei ist es möglich, für jede der unterschiedlichen Bearbeitungsanlagen jeweils ein dafür ausgebildetes und/oder passförmiges Umlaufteil als Adapter zu verwenden. Falls das zu bearbeitende Fahrzeug für eine erste Bearbeitung zunächst in einer ersten Bearbeitungsanlage angeordnet wird, wird hierfür ein erstes Umlaufteil zum Fixieren in der ersten Bearbeitungsanlage verwendet, das nach der Bearbeitung, wenn das Fahrzeug wieder aus der ersten Bearbeitungsanlage entnommen wird, aus dem Fixierungsmodul entnommen wird. Später wird das zu bearbeitende Fahrzeug für mindestens eine weitere, bspw. zweite, Bearbeitung in mindestens einer weiteren, bspw. zweiten, Bearbeitungsanlage angeordnet, wobei hierfür ein weiteres, bspw. zweites, Umlaufteil zum Fixieren des Fahrzeugs in der mindestens einen weiteren Bearbeitungsanlage verwendet wird, das nach der Bearbeitung, wenn das Fahrzeug wieder aus der mindestens einen weiteren Bearbeitungsanlage entnommen wird, aus dem Fixierungsmodul entnommen wird. Dabei ist es möglich, das lediglich eine Fixierungsmodul pro Bauteil allein und/oder unter Nutzung des Umlaufteils zum Fixieren des Fahrzeugs in verschiedenen Bearbeitungsanlagen entsprechend für unterschiedliche Fixierungen multifunktional zu verwenden. Mit unterschiedlichen Umlaufteilen für unterschiedliche Bearbeitungsanlagen ist es möglich, für das Fahrzeug eine modulare demontierbare Befestigung in unterschiedlichen Bearbeitungsanlagen bereitzustellen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie er aus den Ansprüchen hervorgeht, zu verlassen.

Die Erfindung ist anhand von Ausführungsformen in der Zeichnung schematisch dargestellt und wird unter Bezugnahme auf die Zeichnung schematisch und ausführlich beschrieben.
- Figur 1: zeigt in schematischer Darstellung eine aus dem Stand der Technik bekannte Anordnung.
- Figur 2: zeigt in schematischer Darstellung eine Ausführungsform des erfindungsgemäßen Fixierungssystems zum Durchführen einer Ausführungsform des erfindungsgemäßen Verfahrens.

Die Figuren werden zusammenhängend und übergreifend beschrieben. Gleichen Bezugszeichen sind dieselben Komponenten zugeordnet.

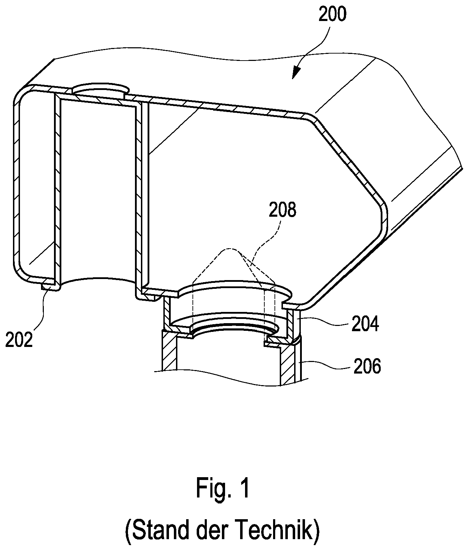

Die in Figur 1 gezeigte Anordnung umfasst ein Bauteil 200, in dem zwei Hülsen 202, 204 angeordnet sind. Dabei ist an einer zweiten Hülse 204 noch ein Zusatzmodul 206 angeordnet, wobei in der zweiten Hülse 204 ein Dorn 208 angeordnet ist.

Bislang waren bei der Fertigung zwei Hülsen 202, 204 in jeweils einem Bauteil 200 nötig, um es in zwei unterschiedlichen Bearbeitungsanlagen zum Bearbeiten zu fixieren. Die erste der Hülsen 202 diente dazu, das Fahrzeug durch Einschieben von genormten Stiften in einem Windkanal zur Testung zu fixieren. Die zweite der beiden Hülsen 204 diente dazu, das Fahrzeug in einer Lackiererei auf einem Schlitten zu befestigen, wobei hierzu bspw. pilzartig ausgebildete und/oder genormte Dorne 208 in die zweite Hülse 204 eingebracht wurden.

Demnach wird mit diesen Hülsen 202, 204 eine Vielzahl an Aufnahme- und/oder Befestigungspunkten in der Karosseriestruktur vorgehalten, die nur während der Herstellung und Erprobung benötigt werden. Die Hülsen 202, 204 werden für die Produktion der Karosserie, die Lackiererei, die Montage, den Windkanal usw. verwendet. Jeder dieser Hülsen 202, 204 stellt strukturelle Anforderungen an die Karosserie und muss in der Karosserie entsprechend starr und fest verankert sein, das erhöht das Gewicht und bringt zusätzliche Kosten mit sich. Später, wenn das Fahrzeug an den Kunden ausgeliefert ist und auf der Straße fährt, werden diese Hülsen 202, 204 nicht mehr weiter benötigt und verursachen nur unnützes Gewicht, was sich auf eine Fahrperformance und einen Verbrauch auswirkt.

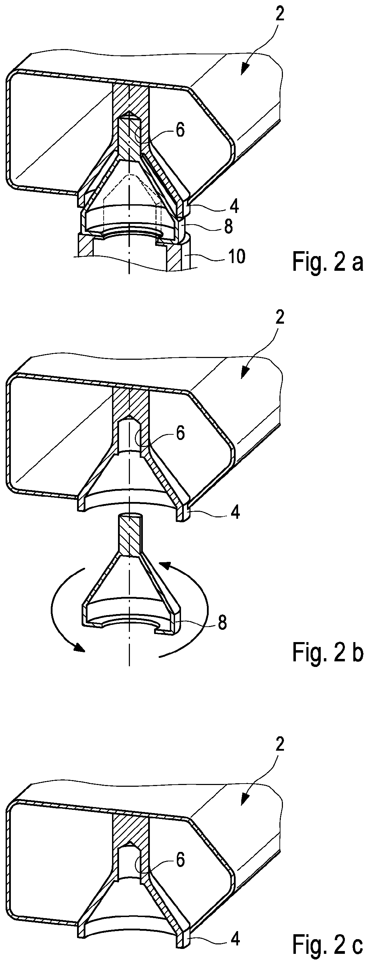

Bei der anhand der Figuren 2a, 2b und 2c schematisch dargestellten Ausführungsform des erfindungsgemäßen Fixierungssystems ist in einem Bauteil 2 einer Karosserie eines noch zu bearbeitenden Fahrzeugs, bspw. eines Kraftfahrzeugs, lediglich ein hier trichterförmiges Fixierungsmodul 4 angeordnet, an dessen Innenwand ein Gewinde 6 angeordnet ist. Das Fixierungssystem weist weiterhin ein Umlaufteil 8 und ein Anlagenmodul 10 auf, wobei das Anlagenmodul 10 als Komponente einer Bearbeitungsanlage zum Bearbeiten des Fahrzeugs unabhängig von seinem jeweiligen Zustand ausgebildet ist, wobei eine Bearbeitung auch ein Testen des Fahrzeugs umfassen kann, wobei auf Grundlage eines Tests eine jeweilige Bearbeitung gezielt durchgeführt werden kann.

Die beiden bislang erforderlichen Hülsen 202, 204 werden nun durch das lediglich eine Fixierungsmodul 4 in dem Bauteil 2 ersetzt, wobei in dem einzigen Fixierungsmodul 4 zusätzlich das Umlaufteil 8 angeordnet, bspw. darin eingeschraubt, wird. Das Fixierungsmodul 4 und das Umlaufteil 8 können jeweils als Hülsen ausgebildet sein bzw. bezeichnet werden, wobei es möglich ist, dass das Fixierungsmodul 4 und/oder das Umlaufteil 8 trichterförmig ist bzw. sind. Außerdem zeigt Figur 2a auch ein Anlagenmodul 10, das als Komponente einer Bearbeitungsanlage bzw. einer Bearbeitungsstation für das Fahrzeug ausgebildet ist. Nach Durchführung der Bearbeitung des Fahrzeugs in und/oder mit der Bearbeitungsanlage wird das Umlaufteil 8 nicht länger benötigt und aus dem Fixierungsmodul 4 ausgeschraubt und somit entfernt (Figur 2b). Dabei wird das Fixierungsmodul 4 bspw. für den Windkanal als weitere Bearbeitungsanlage freigelegt und verbleibt als einzige Montagehilfe in der Karosserie. Dabei ist es möglich, das Fixierungsmodul 4 mit einem Anlagenmodul 10 des Windkanals direkt wieder lösbar zu verbinden und auf das Umlaufteil 8, das für eine indirekte Verbindung zwischen dem Fixierungsmodul 4 und einem Anlagenmodul 10 ausgebildet ist, zu verzichten.

Falls ein erstes Fahrzeug, das das Bauteil 2 aufweist, in einer jeweiligen Bearbeitungsanlage vollständig bearbeitet, bspw. in einer Lackiererei lackiert, worden ist, wird in dieser ein weiteres Fahrzeug zur Bearbeitung angeordnet, wobei das Umlaufteil 8 zur vorübergehenden Fixierung eines jeweiligen Fahrzeugs in dieser Bearbeitungsanlage verwendet wird. Dabei wird das Umlaufteil 8 aus dem Fixierungsmodul 4 im Bauteil 2 des ersten Fahrzeugs entnommen und in dem Fixierungsmodul 4 des Bauteils 2 des zweiten bzw. nächsten zu bearbeitenden Fahrzeugs angeordnet, wobei das Umlaufteil 8 mehrmals wiederverwendet werden kann.

Dieses eine Fixierungsmodul 4 dient, ohne eingeschraubtes, trichterförmiges und/oder hülsenförmiges Umlaufteil 8, dazu, das jeweilige Fahrzeug in einem Windkanal als weitere Bearbeitungsanlage zu fixieren, wobei bspw. ein als Stift ausgebildetes und/oder zu bezeichnendes Umlaufteil 8 verwendet wird, wobei an einer Außenwand dieses Umlaufteils 8 ebenfalls ein Gewinde angeordnet ist, das zu dem Gewinde 6 an der Innenwand des Fixierungsmoduls 4 passförmig ist. Es ist in Ausgestaltung möglich, dass hierbei mehrere, bspw. drei, genormte Umlaufteile 8 verwendet werden, aus denen für jeweils eine Bearbeitungsanlage ein hierfür vorgesehenes Umlaufteil 8 ausgewählt wird, dessen Gewinde auf jenes des Fixierungsmoduls 4 abgestimmt bzw. konfiguriert ist.

Durch das modular aufgebaute Fixierungssystem ergibt sich u. a., dass nur noch das eine Fixierungsmodul 4 pro Bauteil 2 erforderlich ist, das die bislang zwei erforderlichen Hülsen 202, 204 ersetzt, wodurch Gewicht eingespart werden kann. Ferner waren für zwei Hülsen 202, 204 zwei Löcher pro Bauteil erforderlich.

Mit dem Fixierungssystem ist nur noch eine Öffnung für das lediglich eine Fixierungsmodul 4 erforderlich, wodurch eine durch mehrere Öffnungen, die ansonsten vorhanden sind, verursachte Schwächung des Bauteils 2 verringert wird. Demnach muss einer derartigen Schwächung auch nicht durch eine größere Wandstärke des Bauteils 2 entgegengewirkt werden, was wiederum Gewicht einspart. Je nach Anzahl an Bearbeitungsanlagen für das Fahrzeug werden modular demontierbare Umlaufteile 8 verwendet.

Mit dem Fixierungssystem und der damit durchzuführenden Ausführungsform des erfindungsgemäßen Verfahrens ist die Nutzung nur eines Fixierungsmoduls 4 in dem Bauteil 2 während der Produktion vorgesehen, das in dem Bauteil 2 angeordnet ist bzw. wird. Das Fixierungsmodul 4 wird alternativ oder ergänzend mit dem Bauteil 2 formschlüssig verbunden, bspw. darin eingeschraubt, eingeclipst oder eingesteckt, und nun als Fixierungspunkt für das jeweils modular verwendbare Fixierungsmodul 4, das auch als Gehänge ausgebildet sein bzw. bezeichnet werden kann, genutzt, wobei das Umlaufteil 8 mit dem Fixierungsmodul 4 ebenfalls formschlüssig verbunden, bspw. darin eingeschraubt, eingeclipst oder eingesteckt, werden kann. Durch Verwendung des lediglich einen Fixierungsmoduls 4 für unterschiedliche Bearbeitungsanlagen können für Bauteile 2 des Fahrzeugs mehr Freiheit in ihrer Gestaltung realisiert werden, weil z. B. Aerodynamikflächen oder Crashlastpfade direkter gestaltet werden können. Des Weiteren kann das Fixierungsmodul 4 in einem Windkanal als Bearbeitungsanlage mit einer Windkanalbuchse vorübergehend und lösbar verbunden sowie kombiniert werden.

### BEZUGSZEICHEN:

- 2: Bauteil
- 4: Fixierungsmodul
- 6: Gewinde
- 8: Umlaufteil
- 10: Anlagenmodul

- 200: Bauteil
- 202: Hülse
- 204: Hülse
- 206: Zusatzmodul
- 208: Dorn

## Patentansprüche

1. Fixierungssystem, das zum Fixieren eines Fahrzeugs in mindestens zwei unterschiedlichen Bearbeitungsanlagen zum Durchführen von unterschiedlichen Bearbeitungsmethoden für das Fahrzeug ausgebildet ist, wobei das Fixierungssystem mindestens ein Fixierungsmodul (4) aufweist, wobei ein jeweiliges Fixierungsmodul (4) des mindestens einen Fixierungsmoduls (4) in einem Bauteil (2) einer Karosserie des Fahrzeugs anzuordnen ist, wobei das jeweilige Fixierungsmodul (4) in dem Bauteil (2) dazu ausgebildet ist, die Karosserie zum Durchführen einer ersten Bearbeitungsmethode in einer ersten Bearbeitungsanlage und zum Durchführen mindestens einer zweiten Bearbeitungsmethode in mindestens einer zweiten Bearbeitungsanlage lösbar zu fixieren, wobei das mindestens eine Fixierungsmodul (4) rotationssymmetrisch trichterförmig ausgebildet ist, wobei das Fixierungssystem mehrere trichterförmige Umlaufteile (8) aufweist, wobei jeweils ein Umlaufteil (8) in das mindestens eine Fixierungsmodul (4) des mindestens einen Bauteils (2) vorübergehend einzusetzen ist, wobei jeweils ein Umlaufteil (8) als Adapter zum Fixieren des Fahrzeugs in jeweils einer der Bearbeitungsanlagen ausgebildet ist.

2. Fixierungssystem nach Anspruch 1, bei dem an einer Innenwand des mindestens einen Fixierungsmoduls (4) ein Gewinde (6) angeordnet ist.

3. Fixierungssystem nach Anspruch 1 oder 2, bei dem das mindestens eine Fixierungsmodul (4) in das mindestens eine Bauteil (2) eingeschweißt ist.

4. Fixierungssystem nach einem der voranstehenden Ansprüche, das mindestens ein Anlagenmodul (10) der Bearbeitungsanlagen aufweist, das in dem mindestens einen Fixierungsmodul (4) anzuordnen ist.

5. Fixierungssystem nach einem der voranstehenden Ansprüche, das mehrere Fixierungsmodule (4) aufweist, wobei in jeweils einem Bauteil (2) der Karosserie jeweils nur ein einziges Fixierungsmodul (4) angeordnet ist.

6. Verfahren zum Fixieren eines Fahrzeugs in mindestens zwei unterschiedlichen Bearbeitungsanlagen, mit denen unterschiedliche Bearbeitungsmethoden für das Fahrzeug durchgeführt werden, wobei in einem Bauteil (2) einer Karosserie des Fahrzeugs ein Fixierungsmodul (4) angeordnet wird, wobei die Karosserie zum Durchführen einer ersten Bearbeitungsmethode mit dem Fixierungsmodul (4) in dem Bauteil (2) in einer ersten Bearbeitungsanlage und zum Durchführen mindestens einer zweiten Bearbeitungsmethode mit dem Fixierungsmodul (4) in dem Bauteil (2) in mindestens einer zweiten Bearbeitungsanlage lösbar fixiert wird, wobei das mindestens eine Fixierungsmodul (4) rotationssymmetrisch trichterförmig ausgebildet ist, wobei das Fixierungssystem mehrere trichterförmige Umlaufteile (8) aufweist, wobei jeweils ein Umlaufteil (8) in das mindestens eine Fixierungsmodul (4) des mindestens einen Bauteils (2) vorübergehend einzusetzen ist, wobei jeweils ein Umlaufteil (8) als Adapter zum Fixieren des Fahrzeugs in jeweils einer der Bearbeitungsanlagen ausgebildet ist.

7. Verfahren nach Anspruch 6, bei dem die Karosserie zum Bestimmen eines Luftwiderstands des Fahrzeugs in einem Windkanal als Bearbeitungsanlage, zum Lackieren des Fahrzeugs in einer Lackieranlage als Bearbeitungsanlage und/oder zum Montieren des Fahrzeugs in einer Montageanlage als Bearbeitungsanlage fixiert wird.

## Claims

1. Fixing system which is configured for fixing a vehicle in at least two different processing plants for performing different processing methods for the vehicle, wherein the fixing system has at least one fixing module (4), wherein a respective fixing module (4) of the at least one fixing module (4) is to be arranged in a component (2) of a bodywork of the vehicle, wherein the respective fixing module (4) is configured in the component (2) to releasably fix the bodywork in a first processing plant for performing a first processing method and in at least one second processing plant for performing at least one second processing method, wherein the at least one fixing module (4) is configured to be rotationally symmetrical and funnel-shaped, wherein the fixing system has a plurality of funnel-shaped rotating parts (8), wherein a respective rotating part (8) is to be temporarily inserted into the at least one fixing module (4) of the at least one component (2), wherein a respective rotating part (8) is configured as an adapter for fixing the vehicle in one of the respective processing plants.

2. Fixing system according to claim 1, in which a thread (6) is arranged on an inner wall of the at least one fixing module (4).

3. Fixing system according to claim 1 or 2, in which the at least one fixing module (4) is welded into the at least one component (2).

4. Fixing system according to any one of the preceding claims, which has at least one plant module (10) of the processing plants, which is to be arranged in the at least one fixing module (4).

5. Fixing system according to any one of the preceding claims, which has a plurality of fixing modules (4), wherein in each case only a single fixing module (4) is arranged in one component (2) of the bodywork.

6. Method for fixing a vehicle in at least two different processing plants in which different processing methods are performed for the vehicle, wherein a fixing module (4) is arranged in a component (2) of a bodywork of the vehicle, wherein the bodywork is releasably fixed in a first processing plant for performing a first processing method by the fixing module (4) in the component (2) and in at least one second processing plant for performing at least one second processing method by the fixing module (4) in the component (2), wherein the at least one fixing module (4) is configured to be rotationally symmetrical and funnel-shaped, wherein the fixing system has a plurality of funnel-shaped rotating parts (8), wherein a respective rotating part (8) is to be temporarily inserted into the at least one fixing module (4) of the at least one component (2), wherein a respective rotating part (8) is configured as an adapter for fixing the vehicle in one of the respective processing plants.

7. Method according to claim 6, in which the bodywork is fixed in a wind tunnel as a processing plant for determining an air resistance of the vehicle, for painting the vehicle in a paint plant as a processing plant and/or for assembling the vehicle in an assembly plant as a processing plant.

## Revendications

1. Système de fixation qui est réalisé pour la fixation d'un véhicule dans au moins deux installations de traitement différentes pour la mise en oeuvre de différentes méthodes de traitement pour le véhicule, dans lequel le système de fixation présente au moins un module de fixation (4), dans lequel un module de fixation (4) respectif de l'au moins un module de fixation (4) est à agencer dans un composant (2) d'une carrosserie du véhicule, dans lequel le module de fixation (4) respectif est réalisé dans le composant (2) afin de fixer de manière amovible la carrosserie dans une première installation de traitement pour la mise en oeuvre d'une première méthode de traitement et dans au moins une seconde installation de traitement pour la mise en oeuvre d'au moins une seconde méthode de traitement, dans lequel l'au moins un module de fixation (4) est réalisé en forme d'entonnoir de manière symétrique en rotation, dans lequel le système de fixation présente plusieurs parties rotatives (8) en forme d'entonnoir, dans lequel respectivement une partie rotative (8) est à insérer temporairement dans l'au moins un module de fixation (4) de l'au moins un composant (2), dans lequel respectivement une partie rotative (8) est réalisée comme adaptateur pour la fixation du véhicule dans respectivement une des installations de traitement.

2. Système de fixation selon la revendication 1, pour lequel un filetage (6) est agencé au niveau d'une paroi intérieure de l'au moins un module de fixation (4).

3. Système de fixation selon la revendication 1 ou 2, pour lequel l'au moins un module de fixation (4) est soudé dans l'au moins un composant (2).

4. Système de fixation selon l'une quelconque des revendications précédentes qui présente au moins un module d'installation (10) des installations de traitement qui est à agencer dans l'au moins un module de fixation (4).

5. Système de fixation selon l'une quelconque des revendications précédentes qui présente plusieurs modules de fixation (4), dans lequel respectivement uniquement un seul module de fixation (4) est agencé dans respectivement un composant (2) de la carrosserie.

6. Procédé de fixation d'un véhicule dans au moins deux installations de traitement différentes, avec lesquelles différentes méthodes de traitement pour le véhicule sont réalisées, dans lequel un module de fixation (4) est agencé dans un composant (2) d'une carrosserie du véhicule, dans lequel la carrosserie est fixée de manière amovible dans une première installation de traitement pour la mise en oeuvre d'une première méthode de traitement avec le module de fixation (4) dans le composant (2) et dans au moins une seconde installation de traitement pour la mise en oeuvre d'au moins une seconde méthode de traitement avec le module de fixation (4) dans le composant (2), dans lequel l'au moins un module de fixation (4) est réalisé en forme d'entonnoir de manière symétrique en rotation, dans lequel le système de fixation présente plusieurs parties rotatives (8) en entonnoir, dans lequel respectivement une partie rotative (8) est à insérer temporairement dans l'au moins un module de fixation (4) de l'au moins un composant (2), dans lequel respectivement une partie rotative (8) est réalisée comme adaptateur pour la fixation du véhicule dans respectivement une des installations de traitement.

7. Procédé selon la revendication 6, pour lequel la carrosserie est fixée pour la détermination d'une résistance à l'air du véhicule dans une soufflerie comme installation de traitement, pour la peinture du véhicule dans une installation de peinture comme installation de traitement et/ou pour le montage du véhicule dans une installation de montage comme installation de traitement.
